# EUROPEAN PATENT SPECIFICATION

(11) **EP 3 923 399 B1**
(45) Date of publication and mention of the grant of the patent: **19.02.2025**
(21) Application number: 20772699.3
(22) Date of filing: 28.02.2020
(51) Int. Cl.: F28F 9/16, F28D 1/053, H01M 10/6556

(54) **BATTERY PACK AND COOLING SYSTEM THEREOF**
BATTERIESATZ UND KÜHLSYSTEM DAFÜR
BLOC-BATTERIE ET SYSTÈME DE REFROIDISSEMENT ASSOCIÉ

(30) Priority: 18.03.2019 CN 201920344391 U
(43) Date of publication of application: 15.12.2021
(73) Proprietor: Contemporary Amperex Technology (Hong Kong) Limited, Central, Central And Western District (HK)
(72) Inventor: GU, Yanlong, Ningde, Fujian 352100 (CN); BAI, Xueyu, Ningde, Fujian 352100 (CN)
(74) Representative: Gong, Jinping
(86) International application number: PCT/CN2020/077273
(87) International publication number: WO 2020/187005

(56) References cited:
- EP-A2- 0 714 008
- WO-A1-2018/020139
- WO-A1-2018/020139
- WO-A1-2019/229355
- CN-A- 1 162 108
- CN-A- 1 162 108
- CN-U- 205 646 066
- CN-U- 209 357 871
- KR-A- 20060 038 190
- US-A- 5 246 066
- US-A1- 2016 282 062

## Description

### TECHNICAL FIELD

The present application relates to the technical field of energy storage devices, in particular to a battery pack and cooling system thereof.

### BACKGROUND

With the increasing development of the power battery, the energy density of batteries is constantly increasing. However, the problem caused by the increase in energy density is the increase in the heat generation amount of the battery, so the requirement for the cooling efficiency of the cooling system of the battery is becoming more and more strict. The power battery can be cooled by water cooling, specifically by installing a cooling system in the battery pack. The cooling system includes a collecting tube and a cooling tube, and the cooling tube is connected with the collecting tube to realize the communication between the flow channels of the two tubes, so that the cooling liquid can circulate in the flow channels of the two tubes, so as to realize the cooling of the battery pack.

At present, when the existing collecting tube is connected with the cooling tube, it is necessary to punch a flanging hole in the collecting tube, and the cooling tube is provided with a necking structure. A step is formed at the necking structure and goes deeply into the flanging hole. A stamping operation is performed on a partial region of the collecting tube, and the stamped portion will protrude from the rest part in the vicinity to form a flanging hole. The end of the flanging hole abuts against the step of the necking structure, and the necking structure is welded to the flanging hole, thereby realizing the connection between the collecting tube and the cooling tube. However, when the cooling tube is provided with a necking structure, the cooling tube needs to be processed by the necking processing equipment, which reduces the production efficiency of the cooling tube and the cooling system. At the same time, the flow resistance of the cooling liquid at the necking structure of the cooling tube increases, which leads to an increase in the energy consumption of the water pump of the cooling system and reduces the energy utilization rate of the cooling system.

WO2018/020139 A1 concerns heat exchanger, particularly for the thermal regulation of an energy-reserve unit, and assembly formed of said exchanger and of said unit.

CN1162108 A concerns heat exchangers and, more particularly, to an improved connection between a header and a heat transfer tube in a heat exchanger.

EP0714008 A2 concerns heat exchanger with header box.

### SUMMARY

In view of this, embodiments of the present application provide a battery pack and a cooling system thereof to solve the problem of low production efficiency and low energy utilization rate of the cooling system in the prior art. The invention is set out in the appended set of claims. Embodiments of the present application provide a cooling system for a battery pack, the cooling system according to any of claims 1- 12 including:
a collecting tube including a body portion having a cooling flow channel;
a cooling tube, wherein said collecting tube is installed at each of the two ends along the axial direction of the cooling tube, and said cooling tubes are connected to the cooling flow channel,
wherein the body portion is further provided with a mounting hole, and a limiting boss is arranged inside the mounting hole. Along a width direction, the limiting boss abuts against the cooling tube, and the axial direction of the cooling tube is the width direction,
wherein along the width direction, the mounting hole comprises a first hole section and a second hole section, the first hole section is connected to the second hole section , and the second hole section is connected to the cooling flow channel;
along a height direction and a length direction, a size of the first hole section is larger than a size of the second hole section, the limiting boss is formed between the first hole section and the second hole section, the height direction is the direction in which the collecting tube extends and is perpendicular to the axial direction, and the width direction, the length direction, and the height direction are perpendicular to each other;
   and
the first hole section has a first side wall, and the body portion has a second side wall; a thickness of the first side wall is greater than a thickness of the second side wall.

In the present application, by providing a limiting boss in the mounting hole of the collecting tube, the cooling tube can abut against the limiting boss, so as to limit the cooling tube in the width direction, realize the connection between the cooling tube and the two collecting tubes, and can limit the depth of the cooling tube entering into the mounting hole through the limit boss. At the same time, after the limiting boss is disposed in the collecting tube, there is no need to dispose a necking structure on the cooling tube, which can improve the production efficiency of the cooling system, can avoid the increase of the flow resistance of the cooling liquid caused by the cooling tube being disposed with the necking structure, and can improve the energy utilization rate of the cooling system.

In other aspect, embodiments of the present application further provide a battery pack according to claim 13, including: a battery module including a plurality of unit cells; the cooling system according to the above embodiments; the cooling tube is arranged under the battery module, and a bottom of the battery module and the cooling tube are in contact with each other; wherein the cooling system is configured for cooling the battery module.

### BRIEF DESCRIPTION OF THE DRAWINGS

In order to explain the technical solutions of embodiments of the present application more clearly, the drawings needed in the embodiments will be briefly introduced. Obviously, the drawings in the following description are only some embodiments of the present application. For the skilled person in the art, without inventive work, other drawings can be obtained from these drawings.
Fig. 1 is a schematic diagram of a partial structure of a battery pack provided by the present application in a specific embodiment;
Fig. 2 is a schematic diagram of the structure of the cooling system in Fig. 1;
Fig. 3 is a partial enlarged view of part I in Fig. 2;
Fig. 4 is a schematic diagram of the structure of the blocking cover in Fig. 3;
Fig. 5 is a top view of Fig. 2;
Fig. 6 is a sectional view taken along the line A-A of Fig. 5;
Fig. 7 is a partial enlarged view of part II in Fig. 6;
Fig. 8 is a schematic diagram of the structure of the collecting tube in Fig. 2;
Fig. 9 is a front view of Fig. 8;
Fig. 10 is a cross-sectional view taken along the line B-B of Fig. 9;
Fig. 11 is a partial enlarged view of part III in Fig. 9.

In the drawings, the drawings may not be drawn according to actual scale.

### Reference signs:

1-collecting tube;
11-body portion;
111- cooling flow channel;
111a-second side wall;
112-first bottom wall;
12-protruding portion;
13-mounting hole;
131-first hole section;
13 1a-first side wall;
132-second hole section;
133- third hole section;
14-limiting boss;
15-liquid inlet;
16- liquid outlet;
2-cooling tube;
21-mounting section;
22-cooling section;
3- blocking cover;
3 1-third side wall;
311-inner concave portion;
32-second bottom wall;
4-battery module.

### DETAILED DESCRIPTION

In order to better understand the technical solutions of the present application, embodiments of the present application will be described in detail below with reference to the accompanying drawings.

It should be clear that the described embodiments are only a part of the embodiments of the present application, rather than all of the embodiments.

The terms used in the embodiments of the present application are only for the purpose of describing specific embodiments, and are not intended to limit the present application. The singular forms of "a", "said" and "the" used in the embodiments of the present application and the appended claims are also intended to include plural forms, unless the context clearly indicates other meanings.

It should be understood that the term "and/or" used in this text is only an associated relationship describing associated objects, indicating that there can be three types of relationships. For example, A and/or B can mean three cases: A alone exists, both A and B exist at the same time and B alone exists. In addition, the character "/" in this text generally indicates that the associated objects before and after are in an "or" relationship.

It should be noted that the "upper", "lower", "left", "right" and other directional words described in the embodiments of the present application are described from the angle shown in the drawings, and should not be construed to limit the embodiments of the present application. In addition, in the context, it should also be understood that when it is mentioned that an element is connected "on" or "under" another element, it can not only be directly connected "on" or "under" the other element, but also it is indirectly connected "on" or "under" another element through an intermediate element.

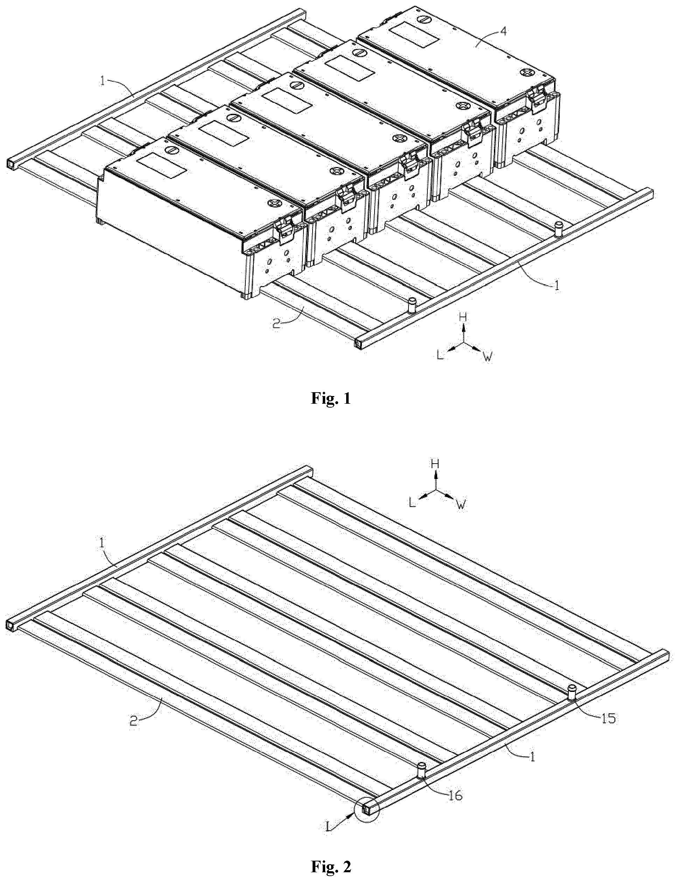

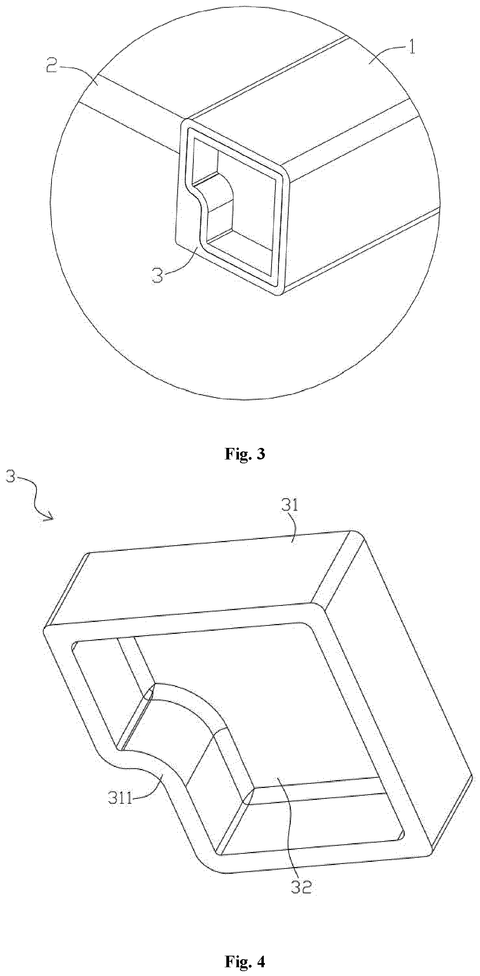

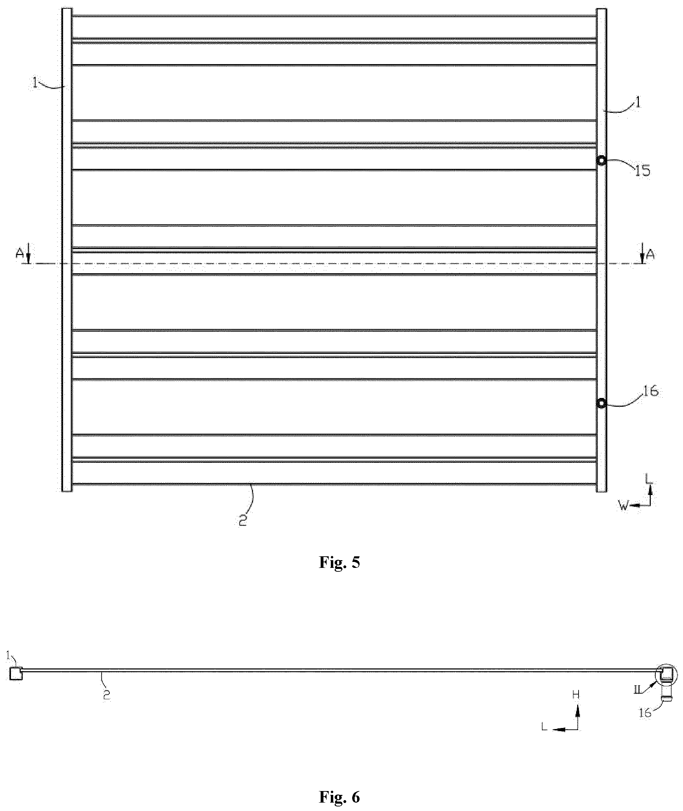

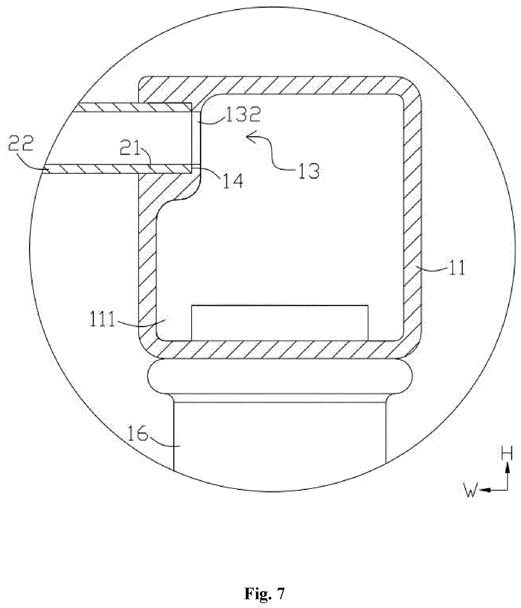

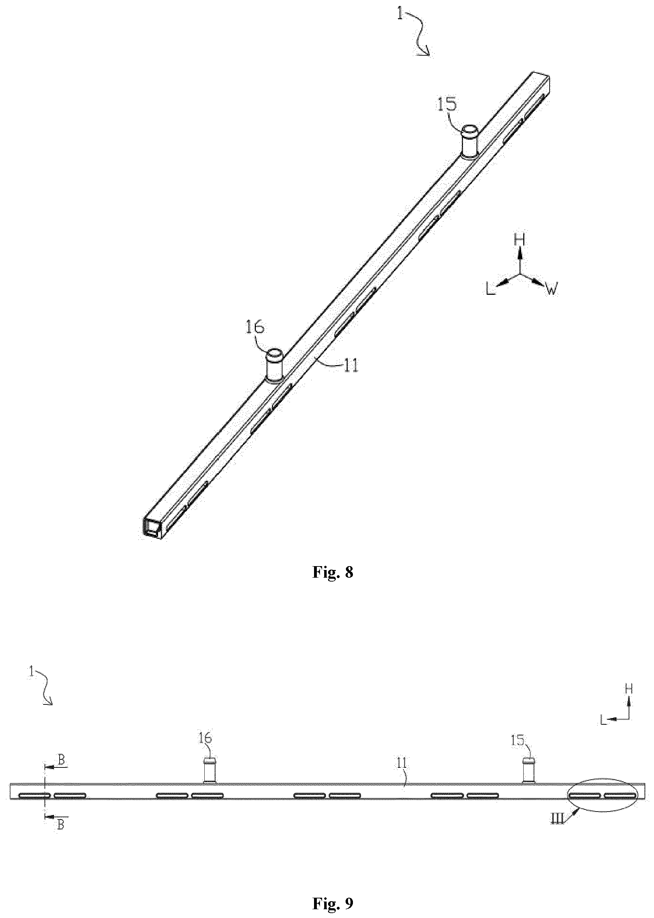

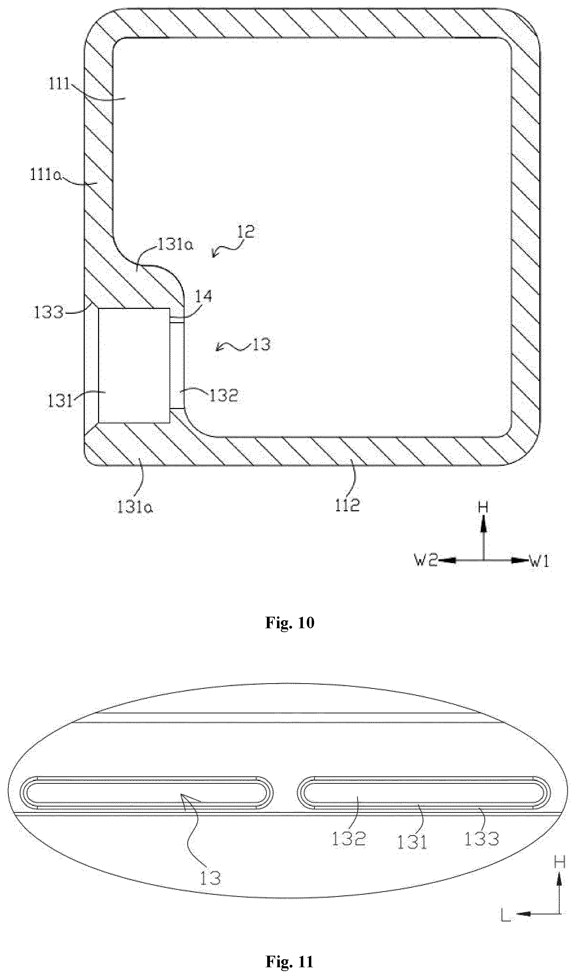

Refers to Figs. 1 to 11, in which Fig. 1 is a partial structural diagram of the battery pack provided by the present application in a specific embodiment; Fig. 2 is a structural diagram of the cooling system in Fig. 1; Fig. 3 is a partial enlarged view of part I in Fig. 2; Fig. 4 is a schematic structural diagram of the blocking cover in Fig. 3; Fig. 5 is a top view of Fig. 2; Fig. 6 is a cross-sectional view taken along the line AA in Fig. 5; Fig. 7 is a partial enlarged view of part II in Fig. 6; Fig. 8 is a schematic diagram of the structure of the collecting tube in Fig. 2; Fig. 9 is a front view of Fig. 8; Fig. 10 is a cross-sectional view taken along the line BB of Fig. 9; Fig. 11 is a partial enlarged view of part III in Fig. 9.

Embodiments of the present application provide a battery pack and a cooling system thereof. As shown in Fig. 1, the battery pack includes a plurality of battery modules 4 stacked along its length direction L, and the battery module 4 includes a plurality of unit cells. The stacking direction of the battery module 4 is defined as the length direction L of the battery pack. At the same time, the battery pack also includes a casing (not shown in the figure), and each battery module 4 is located in the inner cavity of the casing. When the battery pack is operating, the unit cells in the battery module 4 generate heat. In order to ensure that the battery pack works at a suitable temperature, a cooling system is provided in the casing of the battery pack in the present application. The cooling system is used to cool each battery module 4 in the battery pack.

In an embodiment, as shown in Fig 2, the cooling system includes a plurality of cooling tubes 2 along the length direction L of the battery pack. The cooling tubes 2 are parallel to each other and extend along the width direction W of the battery pack. The axial direction of the cooling tubes 2 is the width direction W of the battery pack. The width direction W of the battery pack is perpendicular to the length direction L. The cooling tube 2 may be a harmonica-shaped tube, that is, as shown in Fig. 2, the outside of the harmonica-shaped tube has a flat structure, and the inside of the harmonica-shaped tube has a plurality of passages distributed along the length direction L at intervals. The cooling tubes 2 are located below the battery module 4, and the bottom of the battery module 4 is connected with the flat cooling tubes 2 so that the bottom of the battery module 4 can exchange heat with the cooling tube 2.

In an embodiment, the cooling system further includes two collecting tubes 1. The two collecting tubes 1 are located at the two ends of the cooling tube 2 in the width direction W, respectively. The collecting tube 1 has a cooling flow channel 111 extending in the length direction L inside. The cooling flow channel 111 is used for cooling liquid to circulate. After the above-mentioned cooling tube 2 is connected to the collecting tube 1, the tube of the cooling tube 2 communicates with the cooling flow channel 111. One of the two collecting tubes 1 is provided with a liquid inlet 15 and a liquid outlet 16.

When the cooling system is operating, the cooling liquid enters the cooling flow channel 111 through the liquid inlet 15 and enters the cooling tubes 2 while flowing along the cooling flow channel 111. The cooling liquid can cool the bottom of the unit cell while flowing in the cooling tube 2, and the circulated cooling liquid is discharged out of the cooling system through the liquid outlet 16.

In the present application, the connection between the collecting tube 1 and the cooling tube 2 is mainly achieved by improving the structure of the collecting tube 1, thereby improving the operation efficiency of the cooling system and increasing the energy utilization rate of the cooling system.

In an embodiment, as shown in Figs. 7 and 10, the collecting tube 1 includes a body portion 11. The body portion 11 has a cooling flow channel 111. At the same time, the body portion 11 is also provided with a mounting hole 13. The mounting hole 13 is used for connecting the collecting tube 1 and the cooling tube 2. Along the width direction W of the battery pack, a limiting boss 14 is provided inside the mounting hole 13, and the limiting boss 14 is used to abut against the cooling tube 2. With the expression "abut against", it is meant that the cooling tube 2 abuts against the limiting boss 14. The extending direction of the cooling tube 2 is the width direction W of the battery pack.

In the present application, by providing the limiting boss 14 in the mounting hole 13 of the collecting tube 1, the cooling tube 2 can abut against the limiting boss 14, so that the limiting boss 14 functions to limit the cooling tube 2 along the width direction W and realizes the connection between the cooling tube 2 and the two collecting tubes 1, and can limit the depth of the cooling tube 2 entering into the mounting hole 13 through the limiting boss 14. At the same time, after the limiting boss 14 is provided in the collecting tube 1, there is no need to provide a necking structure in the cooling tube 2, which can improve the production efficiency of the cooling system, and can avoid the increase of the flow resistance of the cooling liquid caused by the cooling tube 2 being provided with a necking structure and thus help to improve the energy utilization rate of the cooling system. The necking structure means that after the end of the cooling tube 2 is processed by the necking process, the opening corresponding to the end is reduced.

In an example, as shown in Fig. 10, the mounting hole 13 includes a first hole section 131 and a second hole section 132 along the width direction W (the axial direction of the mounting hole 13 is the width direction W), wherein the second hole section 132 communicates with the cooling flow channel 111 of the body portion 11. As shown in Figs. 10 and 11, the size of the first hole section 131 in the height direction H is greater than the size of the second hole section 132 in the height direction H, and the size of the first hole section 131 in the length direction L is also greater than that of the second hole section 132 in the height direction H, so that the above-mentioned limiting boss 14 is formed between the first hole section 131 and the second hole section 132. The height direction H and the width direction W are perpendicular to each other. It should be noted that, as shown in Fig. 10, in the mounting hole 13, the first hole section 131 and the second hole section 132 are coaxial. Therefore, the size of the above-mentioned first hole section 131 or the second hole section 132 along the height direction H refers to the distance from the side wall of the corresponding hole section to the axis of the mounting hole 13 along the height direction H. Similarly, the size of the first hole section 131 or the second hole section 132 along the length direction L refers to the distance from the side wall of the corresponding hole section to the axis of the mounting hole 13 along the length direction L.

In the present embodiment, the mounting hole 13 for installing the cooling tube 2 in the collecting tube 1 is a stepped hole, so that the above-mentioned limiting boss 14 can be formed on the inner wall of the mounting hole 13. As shown in Fig. 7, the mounting section 21 of the cooling tube 2 protrudes into the first hole section 131 of the mounting hole 13, and abuts against the limiting boss 14, and the cooling tube 2 communicates with the second hole section 132 so that the cooling tube 2 communicates with the cooling flow channel 111.

As shown in Fig. 7, the inner diameter of the first hole section 131 is the same as the outer diameter of the cooling tube 2, or the inner diameter of the first hole section 131 is greater than the outer diameter of the cooling tube 2, so that the outer wall of the cooling tube 2 is attached to and welded to the inner wall of the first hole section 131, while ensuring the sealing between the two, reducing the possibility of the leakage of the cooling liquid from between the outer wall of the cooling tube 2 and the inner wall of the first hole section 131 and preventing the cooling tube 2 from falling out of the first hole section 131 when the battery pack vibrates.

In an embodiment, after the cooling tube 2 abuts against the limiting boss 14, the inner wall of the second hole section 132 is flush with the inner wall of the cooling tube 2, that is, the inner diameter of the second hole section 132 is the same as the inner diameter of the cooling tube 2. In the present embodiment, since the inner wall of the second hole section 132 is flush with the inner wall of the cooling tube 2 with no stepped surface between the two, the flow resistance to the cooling liquid can be avoided when the cooling liquid flows through, thereby reducing the energy loss when the cooling liquid flows and improving the energy utilization rate of the cooling system. At the same time, it can also improve the stability of the cooling liquid flow, thereby ensuring the uniformity of the cooling effect. It is understandable that the inner wall of the second hole section 132 being flush with the inner wall of the cooling tube 2 is not exactly level, as long as the inner walls of the two are substantially flush to reduce the flow resistance to the cooling liquid.

In an embodiment, as shown in Fig. 10, the first hole section 131 of the mounting hole 13 has a first side wall 131a. The cooling flow channel 111 has a second side wall 111a. The thickness of the first side wall 131a is greater than the thickness of the second side wall 111a. The thickness of the second side wall 111a is the thickness of the body portion 11. In the body portion 11, the wall thickness at the mounting hole 13 is greater than the wall thickness at the rest position of the body portion 11. That is, at the mounting hole 13, the strength of the collecting tube 1 at the mounting hole 13 can be improved by increasing the wall thickness, and thus the connection reliability between the collecting tube 1 and the cooling tube 2 in the radial direction is improved.

Further, as shown in Figs. 10 and 11, in the mounting hole 13, the first hole section 131 is also connected to a third hole section 133, and the third hole section 133 and the second hole section 132 are respectively located on the two ends of in the first hole section 131 in the axial direction. Along the direction W1 from the third hole section 133 to the first hole section 131, the third hole section 133 has a tapered structure with a gradually decreasing cross-sectional area.

The cooling tube 2 is welded to the collecting tube 1 through the mounting hole 13. In an example, the outer wall of the cooling tube 2 is welded to the inner wall of the mounting hole 13. In the present embodiment, the third hole section 133 with a tapered structure can facilitate welding operations. At the same time, the third hole section 133 can also be used to contain solder, thereby effectively improving the connection stability between the cooling tube 2 and the collecting tube 1.

In each of the above embodiments, the body portion 11 is provided with a protruding portion 12 inside. The protruding portion 12 protrudes toward the inside of the body portion 11 in the width direction W (the axial direction of the cooling tube 2) and the height direction H. The protruding portion 12 extends along the length direction L of the collecting tube 1 and the protruding portion 12 is correspondingly provided with a plurality of mounting holes 13 along the length direction L. Each mounting hole 13 extends along the width direction W, and each mounting hole 13 is used to connect with the corresponding cooling tube 2. In the present embodiment, by providing the protruding portion 12 inside the body portion 11, the size of the mounting hole 13 in the width direction W can be increased, thereby increasing the length of the engagement between the cooling tube 2 and the mounting hole 13, which is beneficial to improving the connection reliability between the two.

In an embodiment, as shown in Fig. 10, a circular arc transition exists between the protruding portion 12 and the body portion 11, and the outer contour of the protruding portion 12 is a circular arc. Since the protruding portion 12 participates in enclosing the cooling flow channel 111 of the collecting tube 1, the arrangement of the present embodiment can prevent the cooling flow channel 111 from forming a bent position, thereby reducing the flow resistance of the cooling liquid in the cooling flow channel 111, increasing the energy utilization rate of the cooling system, and improving the uniformity of the cooling liquid flowing in the cooling flow channel 111, thereby improving the uniformity of the cooling effect of the cooling system for the battery module 4.

Further, as shown in Fig. 10, along the height direction H of the collecting tube 1, the body portion 11 has a first bottom wall 112 and a second side wall 111a. The second side wall 111a is a side wall close to the cooling tube 2. The protruding portion 12 is disposed on the first bottom wall 112 and the second side wall 111a, and is located inside the body portion 11. The protruding portion 12 protrudes from the first bottom wall 112 and the second side wall 111a.

In the present embodiment, when the collecting tube 1 is molded, the mounting hole 13 is disposed in the protruding portion 12 in the body portion 11 by machining, without adopting the processing manner of punching the mounting hole via a die in the prior art. Therefore, there is no need to reserve the wall thickness of the punching die in the collecting tube 1, so that the height of the mounting hole 13 can be reduced. At the same time, the collecting tube 1 in the present application can be directly molded by extrusion, thereby improving the production efficiency of the collecting tube 1, and making the chamfer at the bottom of the collecting tube 1 smaller or omitted, so as to enable further reduction of the height of the mounting hole 13. In this way, compared with the prior art, the mounting hole 13 in the present application is closer to the bottom of the battery pack, so that the cooling tube 2 is closer to the bottom of the battery pack, that is, the height of the entire cooling system in the battery pack can be reduced, and the energy density and group efficiency of the battery pack is improved.

In each of the above embodiments, as shown in Figs. 2 to 4, along the length direction L of the collecting tube 1, the two ends of the body portion 11 are provided with blocking covers 3. The blocking cover 3 is used to block the cooling flow channel 111 along the length direction L, so as to prevent the cooling liquid from leaking from the end of the collecting tube 1.

In an embodiment, as shown in Figs. 3 and 4, the blocking cover 3 includes a third side wall 31 and a second bottom wall 32, wherein the third side wall 31 is engaged with and welded to the inner wall of the body portion 11. The second bottom wall 32 can block the cooling flow channel 111. The third side wall 31 is provided with an inner concave portion 311 that engages with the protruding portion 12. The inner concave portion 311 is recessed toward the inside of the blocking cover 3, and the inner concave portion 311 is attached to and welded to the protruding portion 12.

Of course, the structure of the blocking cover 3 is not limited to this, and may be other structures. For example, the blocking cover 3 may be a flat plate structure, and the flat plate structure is attached to and welded to each of the two ends of the body portion 11 along the length direction L. In the present embodiment, the welding area between the blocking cover 3 and the body portion 11 is relatively large, which can improve the reliability of the connection between the two and prevent the blocking cover 3 from being disconnected from the body portion 11 under the action of hydraulic pressure.

In each of the above embodiments, as shown in Fig. 7, along the width direction W (the axial direction of the cooling tube 2), the cooling tube 2 includes a mounting section 21 and a cooling section 22. The mounting section 21 protrudes into the mounting hole 13, and the end of the mounting section 21 abuts against the limiting boss 14. The cooling section 22 is located outside the mounting hole 13. In an example, the cross-sectional area of the mounting section 21 is equal to the cross-sectional area of the cooling section 22. The cross-sectional area of the mounting section 21 and the cross-sectional area of the cooling section 22 being equal does not require exact equality in a mathematic sense, as long as the cross-sectional areas of the two are approximately equal. For example, the cooling tube 2 can be an equal-diameter tube, that is, the outer diameters of the cross sections perpendicular to the axial direction at various positions on the cooling tube 2 are equal in size.

In the present application, after the above-mentioned limiting boss 14 is provided in the mounting hole 13 of the collecting tube 1, the cooling tube 2 can abut against the limiting boss 14, and therefore, there is no need to install the necking structure in the prior art on the cooling tube 2. That is, the mounting section 21 of the cooling tube 2 has the same cross-sectional area as the cooling section 22, which can reduce the processing difficulty of the cooling tube 2, improve production efficiency, and prevent increase in the flow resistance of the cooling liquid caused by disposing the necking structure, and improves the energy utilization rate of the cooling system.

Further, embodiments of the present application also provide a battery pack, which includes a battery module 4 and a cooling system. The cooling system is used to cool the battery module 4, wherein the cooling system is the cooling system of any of the above embodiments. Since the cooling system has the above technical effects, the battery pack including the cooling system should also have corresponding technical effects, which will not be repeated here.

## Claims

1. A cooling system for a battery pack, comprising:
a collecting tube (1) comprising a body portion (11) with a cooling flow channel (111);
a cooling tube (2), wherein said collecting tube (1) is installed at each of the two ends along the axial direction of the cooling tube (2), and said cooling tubes (2) are connected to the cooling flow channel (111),
wherein the body portion (11) is further provided with a mounting hole (13), a limiting boss (14) is arranged inside the mounting hole (13), the limiting boss (14) abuts against the cooling tube (2) along a width direction, and the axial direction of the cooling tube (2) is the width direction,
wherein along the width direction, the mounting hole (13) comprises a first hole section (131) and a second hole section (132), the first hole section (131) is connected to the second hole section (132), and the second hole section (132) is connected to the cooling flow channel (111);
along a height direction and a length direction, a size of the first hole section (131) is larger than a size of the second hole section (132), the limiting boss (14) is formed between the first hole section (131) and the second hole section (132), the height direction is the direction in which the collecting tube (1) extends and is perpendicular to the axial direction, and the width direction, the length direction, and the height direction are perpendicular to each other;
and
the first hole section (131) has a first side wall (131a), and the body portion (11) has a second side wall (111a); a thickness of the first side wall (131a) is greater than a thickness of the second side wall (111a).

2. The cooling system according to claim 1, wherein an outer wall of the cooling tube (2) is welded to an inner wall of the mounting hole (13).

3. The cooling system according to claim 1 or 2, wherein two collecting tubes (2) are provided, and the two collecting tubes (2) are respectively located at two ends of the cooling tube (2) along the width direction,
wherein one of the two collecting tubes (1) is provided with a liquid inlet (15) and a liquid outlet (16).

4. The cooling system according to any one of claims 1-3, wherein an inner diameter of the first hole section (131) is the same as an outer diameter of the cooling tube (2); or, the inner diameter of the first hole section (131) is greater than the outer diameter of the cooling tube (2).

5. The cooling system according to any one of claims 1-4, wherein an outer wall of the cooling tube (2) is attached to and welded to an inner wall of the first hole section (131).

6. The cooling system according to any one of claims 1-5, wherein along the height direction, an inner wall of the second hole section (132) is flush with an inner wall of the cooling tube (2).

7. The cooling system according to any one of claims 2 to 6, wherein the first hole section (131) is further connected with a third hole section (133), and the third hole section (133) and the second hole section (132) are respectively located on the two ends of the first hole section (131) along the width direction;
along the direction from the third hole section (133) to the first hole section (131), the third hole section (133) is tapered with a gradually decreasing cross-sectional area.

8. The cooling system according to any one of claims 1 to 7, wherein along the width direction, the cooling tube (2) comprises a mounting section (21) and a cooling section (22);
wherein the mounting section (21) protrudes into the mounting hole (13), the mounting section (21) abuts against the limiting boss (14), and the cooling section (22) is located outside the mounting hole (13);
a cross-sectional area of the mounting section (21) is equal to a cross-sectional area of the cooling section (22).

9. The cooling system according to any one of claims 1 to 8, wherein the body portion (11) is provided with a protruding portion (12) inside the body portion (11), the protruding portion (12) protrudes toward the inside of the body portion (11) in the width direction and a height direction and the protruding portion (12) extends along a length direction;
along the length direction, the protruding portion (12) is provided with a plurality of the mounting holes (13),

10. The cooling system according to claim 9, wherein along the height direction, the body portion (11) has a first bottom wall (112), along the width direction, the body portion (11) has a second side wall (111a), and the second side wall (111a) is close to the cooling tube (2);
the protruding portion (12) is disposed on the first bottom wall (112) and the second side wall (111a), and along the height direction, the protruding portion (12) protrudes from the first bottom wall (112), and along the width direction, the protruding portion (12) protrudes from the second side wall (111a).

11. The cooling system according to claim 9 or 10, wherein along the length direction, both ends of the body portion (11) are fixedly connected with a blocking cover (3), and the blocking cover (3) blocks the cooling flow channel (111),

12. The cooling system according to claim 11, wherein the blocking cover (3) comprises a second bottom wall (32) and a third side wall (31);
wherein the third side wall (31) is provided with an inner concave portion (311) that is engaged with the protruding portion (12), and the third side wall (31) is fixedly connected with an inner wall of the body portion (11);
the second bottom wall (32) blocks the cooling flow channel (111).

13. A battery pack, comprising:
a battery module (4) comprising a plurality of unit cells;
the cooling system according to any one of claims 1 to 12, wherein the cooling tube (2) is arranged below the battery module (4), and a bottom of the battery module (4) and the cooling tube (2) are in contact with each other;
wherein the cooling system is configured for cooling the battery module (4).

## Patentansprüche

1. Kühlsystem für einen Batteriesatz, umfassend:
ein Sammelrohr (1), das einen Körperabschnitt (11) mit einem Kühlströmungskanal (111) umfasst;
ein Kühlrohr (2), wobei das Sammelrohr (1) an jedem der zwei Enden entlang der axialen Richtung des Kühlrohrs (2) installiert ist und die Kühlrohre (2) mit dem Kühlströmungskanal (111) verbunden sind,
wobei der Körperabschnitt (11) ferner mit einem Montageloch (13) versehen ist, ein Begrenzungsvorsprung (14) innerhalb des Montagelochs (13) angeordnet ist, der Begrenzungsvorsprung (14) entlang einer Breitenrichtung an dem Kühlrohr (2) anliegt und die axiale Richtung des Kühlrohrs (2) die Breitenrichtung ist,
wobei das Montageloch (13) entlang der Breitenrichtung einen ersten Lochabschnitt (131) und einen zweiten Lochabschnitt (132) umfasst, der erste Lochabschnitt (131) mit dem zweiten Lochabschnitt (132) verbunden ist und der zweite Lochabschnitt (132) mit dem Kühlströmungskanal (111) verbunden ist;
entlang einer Höhenrichtung und einer Längsrichtung eine Größe des ersten Lochabschnitts (131) größer als eine Größe des zweiten Lochabschnitts (132) ist, der Begrenzungsbuckel (14) zwischen dem ersten Lochabschnitt (131) und dem zweiten Lochabschnitt (132) ausgebildet ist, die Höhenrichtung die Richtung ist, in der sich das Sammelrohr (1) erstreckt und rechtwinklig zur axialen Richtung ist, und die Breitenrichtung, die Längsrichtung und die Höhenrichtung rechtwinklig zueinander sind;
und
der erste Lochabschnitt (131) eine erste Seitenwand (131a) aufweist und der Körperabschnitt (11) eine zweite Seitenwand (111a) aufweist; eine Dicke der ersten Seitenwand (131a) größer als eine Dicke der zweiten Seitenwand (111a) ist.

2. Kühlsystem nach Anspruch 1, wobei eine Außenwand des Kühlrohrs (2) mit einer Innenwand des Montagelochs (13) verschweißt ist.

3. Kühlsystem nach Anspruch 1 oder 2, wobei zwei Sammelrohre (2) vorgesehen sind und die zwei Sammelrohre (2) jeweils an zwei Enden des Kühlrohrs (2) entlang der Breitenrichtung angeordnet sind,
wobei eines der zwei Sammelrohre (1) mit einem Flüssigkeitseinlass (15) und einem Flüssigkeitsauslass (16) versehen ist.

4. Kühlsystem nach einem der Ansprüche 1-3, wobei ein Innendurchmesser des ersten Lochabschnitts (131) gleich einem Außendurchmesser des Kühlrohrs (2) ist; oder der Innendurchmesser des ersten Lochabschnitts (131) größer als der Außendurchmesser des Kühlrohrs (2) ist.

5. Kühlsystem nach einem der Ansprüche 1-4, wobei eine Außenwand des Kühlrohrs (2) an einer Innenwand des ersten Lochabschnitts (131) anliegt und mit dieser verschweißt ist.

6. Kühlsystem nach einem der Ansprüche 1-5, wobei entlang der Höhenrichtung eine Innenwand des zweiten Lochabschnitts (132) bündig mit einer Innenwand des Kühlrohrs (2) ist.

7. Kühlsystem nach einem der Ansprüche 2 bis 6, wobei der erste Lochabschnitt (131) ferner mit einem dritten Lochabschnitt (133) verbunden ist und sich der dritte Lochabschnitt (133) und der zweite Lochabschnitt (132) jeweils an den zwei Enden des ersten Lochabschnitts (131) entlang der Breitenrichtung befinden;
entlang der Richtung vom dritten Lochabschnitt (133) zum ersten Lochabschnitt (131) sich der dritte Lochabschnitt (133) mit einer allmählich abnehmenden Querschnittsfläche verjüngt.

8. Kühlsystem nach einem der Ansprüche 1 bis 7, wobei entlang der Breitenrichtung das Kühlrohr (2) einen Montageabschnitt (21) und einen Kühlabschnitt (22) umfasst;
wobei der Montageabschnitt (21) in das Montageloch (13) vorsteht, der Montageabschnitt (21) an dem Begrenzungsvorsprung (14) anliegt und sich der Kühlabschnitt (22) außerhalb des Montagelochs (13) befindet;
eine Querschnittsfläche des Montageabschnitts (21) gleich einer Querschnittsfläche des Kühlabschnitts (22) ist.

9. Kühlsystem nach einem der Ansprüche 1 bis 8, wobei der Körperabschnitt (11) mit einem vorstehenden Abschnitt (12) innerhalb des Körperabschnitts (11) versehen ist, der vorstehende Abschnitt (12) in der Breitenrichtung und einer Höhenrichtung zur Innenseite des Körperabschnitts (11) vorsteht und sich der vorstehende Abschnitt (12) entlang einer Längsrichtung erstreckt;
entlang der Längsrichtung der vorstehende Abschnitt (12) mit einer Vielzahl der Montagelöcher (13) versehen ist.

10. Kühlsystem nach Anspruch 9, wobei entlang der Höhenrichtung der Körperabschnitt (11) eine erste Bodenwand (112) aufweist, entlang der Breitenrichtung der Körperabschnitt (11) eine zweite Seitenwand (111a) aufweist und die zweite Seitenwand (111a) nahe dem Kühlrohr (2) ist; der vorstehende Abschnitt (12) auf der ersten Bodenwand (112) und der zweiten Seitenwand (111a) angeordnet ist und entlang der Höhenrichtung der vorstehende Abschnitt (12) von der ersten Bodenwand (112) vorsteht und entlang der Breitenrichtung der vorstehende Abschnitt (12) von der zweiten Seitenwand (111a) vorsteht.

11. Kühlsystem nach Anspruch 9 oder 10, wobei entlang der Längsrichtung beide Enden des Körperabschnitts (11) fest mit einer Blockierabdeckung (3) verbunden sind und die Blockierabdeckung (3) den Kühlströmungskanal (111) blockiert.

12. Kühlsystem nach Anspruch 11, wobei die Blockierabdeckung (3) eine zweite Bodenwand (32) und eine dritte Seitenwand (31) umfasst;
wobei die dritte Seitenwand (31) mit einem inneren konkaven Abschnitt (311) versehen ist, der mit dem vorstehenden Abschnitt (12) in Eingriff steht, und die dritte Seitenwand (31) fest mit einer Innenwand des Körperabschnitts (11) verbunden ist;
die zweite Bodenwand (32) den Kühlströmungskanal (111) blockiert.

13. Batteriesatz, umfassend:
ein Batteriemodul (4) mit einer Vielzahl von Einheitszellen;
das Kühlsystem nach einem der Ansprüche 1 bis 12, wobei das Kühlrohr (2) unterhalb des Batteriemoduls (4) angeordnet ist und ein Boden des Batteriemoduls (4) und das Kühlrohr (2) miteinander in Kontakt stehen;
wobei das Kühlsystem dazu ausgelegt ist, das Batteriemodul (4) zu kühlen.

## Revendications

1. Système de refroidissement pour un bloc-batterie, comprenant :
un tube de collecte (1) comprenant une partie corps (11) dotée d'un canal de flux de refroidissement (111) ;
un tube de refroidissement (2), dans lequel ledit tube de collecte (1) est installé à chacune de deux extrémités dans la direction axiale du tube de refroidissement (2), et lesdits tubes de refroidissement (2) sont raccordés au canal de flux de refroidissement (111),
dans lequel la partie corps (11) est en outre pourvue d'un trou de montage (13), un bossage de limitation (14) est disposé à l'intérieur du trou de montage (13), le bossage de limitation (14) vient en butée contre le tube de refroidissement (2) dans le sens de la largeur, et la direction axiale du tube de refroidissement (2) est le sens de la largeur,
dans lequel dans le sens de la largeur, le trou de montage (13) comprend une première section de trou (131) et une deuxième section de trou (132), la première section de trou (131) est raccordée à la deuxième section de trou (132), et la deuxième section de trou (132) est raccordée au canal de flux de refroidissement (111) ;
dans le sens de la hauteur et le sens de la longueur, une taille de la première section de trou (131) est supérieure à une taille de la deuxième section de trou (132), le bossage de limitation (14) est formé entre la première section de trou (131) et la deuxième section de trou (132), le sens de la hauteur est la direction dans laquelle le tube de collecte (1) s'étend et est perpendiculaire à la direction axiale, et le sens de la largeur, le sens de la longueur et le sens de la hauteur sont perpendiculaires les uns aux autres ;
et
la première section de trou (131) a une première paroi latérale (13 1a), et la partie corps (11) a une deuxième paroi latérale (111a) ; une épaisseur de la première paroi latérale (131a) est supérieure à une épaisseur de la deuxième paroi latérale (111a).

2. Système de refroidissement selon la revendication 1, dans lequel une paroi externe du tube de refroidissement (2) est soudée à une paroi interne du trou de montage (13).

3. Système de refroidissement selon la revendication 1 ou 2, dans lequel deux tubes de collecte (2) sont prévus, et les deux tubes de collecte (2) sont respectivement situés à deux extrémités du tube de refroidissement (2) dans le sens de la largeur,
dans lequel l'un des deux tubes de collecte (1) est pourvu d'une entrée de liquide (15) et d'une sortie de liquide (16).

4. Système de refroidissement selon l'une quelconque des revendications 1 à 3, dans lequel un diamètre interne de la première section de trou (131) est identique à un diamètre externe du tube de refroidissement (2) ; ou le diamètre interne de la première section de trou (131) est supérieur au diamètre externe du tube de refroidissement (2).

5. Système de refroidissement selon l'une quelconque des revendications 1 à 4, dans lequel une paroi externe du tube de refroidissement (2) est fixée et soudée à une paroi interne de la première section de trou (131).

6. Système de refroidissement selon l'une quelconque des revendications 1 à 5, dans lequel dans le sens de la hauteur, une paroi interne de la deuxième section de trou (132) est alignée avec une paroi interne du tube de refroidissement (2).

7. Système de refroidissement selon l'une quelconque des revendications 2 à 6, dans lequel la première section de trou (131) est en outre raccordée à une troisième section de trou (133), et la troisième section de trou (133) et la deuxième section de trou (132) sont respectivement situées sur les deux extrémités de la première section de trou (131) dans le sens de la largeur ;
dans la direction allant de la troisième section de trou (133) à la première section de trou (131), la troisième section de trou (133) est conique avec une section transversale diminuant progressivement.

8. Système de refroidissement selon l'une quelconque des revendications 1 à 7, dans lequel dans le sens de la largeur, le tube de refroidissement (2) comprend une section de montage (21) et une section de refroidissement (22) ;
dans lequel la section de montage (21) fait saillie dans le trou de montage (13), la section de montage (21) vient en butée contre le bossage de limitation (14), et la section de refroidissement (22) est située à l'extérieur du trou de montage (13) ;
une section transversale de la section de montage (21) est égale à une section transversale de la section de refroidissement (22).

9. Système de refroidissement selon l'une quelconque des revendications 1 à 8, dans lequel la partie corps (11) est pourvue d'une partie en saillie (12) à l'intérieur de la partie corps (11), la partie en saillie (12) fait saillie vers l'intérieur de la partie corps (11) dans le sens de la largeur et le sens de la hauteur et la partie en saillie (12) s'étend dans le sens de la longueur ;
dans le sens de la longueur, la partie en saillie (12) est pourvue d'une pluralité des trous de montage (13).

10. Système de refroidissement selon la revendication 9, dans lequel dans le sens de la hauteur, la partie corps (11) a une première paroi inférieure (112), dans le sens de la largeur, la partie corps (11) a une deuxième paroi latérale (111a) et la deuxième paroi latérale (111a) est proche du tube de refroidissement (2) ;
la partie en saillie (12) est disposée sur la première paroi inférieure (112) et la deuxième paroi latérale (111a), et dans le sens de la hauteur, la partie en saillie (12) fait saillie depuis la première paroi inférieure (112), et dans le sens de la largeur, la partie en saillie (12) fait saillie depuis la deuxième paroi latérale (111a).

11. Système de refroidissement selon la revendication 9 ou 10, dans lequel dans le sens de la longueur, les deux extrémités de la partie corps (11) sont raccordées à demeure à un couvercle de blocage (3), et le couvercle de blocage (3) bloque le canal de flux de refroidissement (111).

12. Système de refroidissement selon la revendication 11, dans lequel le couvercle de blocage (3) comprend une seconde paroi inférieure (32) et une troisième paroi latérale (31) ;
dans lequel la troisième paroi latérale (31) est pourvue d'une partie concave interne (311) qui est en prise avec la partie en saillie (12), et la troisième paroi latérale (31) est raccordée à demeure à une paroi interne de la partie corps (11) ;
la seconde paroi inférieure (32) bloque le canal de flux de refroidissement (111).

13. Bloc-batterie, comprenant :
un module de batterie (4) comprenant une pluralité d'éléments individuels ;
le système de refroidissement selon l'une quelconque des revendications 1 à 12, dans lequel le tube de refroidissement (2) est disposé sous le module de batterie (4), et une partie inférieure du module de batterie (4) et le tube de refroidissement (2) sont en contact l'un avec l'autre ;
dans lequel le système de refroidissement est conçu pour refroidir le module de batterie (4).
